# EUROPEAN PATENT SPECIFICATION

(11) **EP 0 546 499 B1**
(45) Date of publication and mention of the grant of the patent: **05.06.1996**
(21) Application number: 92120904.5
(22) Date of filing: 08.12.1992
(51) Int. Cl.: B01J 29/04, B01J 21/16, C08F 10/00, C08F 4/22, C08F 4/69

(54) **A process for producing a chromium pillared ribbon-like clays catalyst and its use for the polymerisation of alpha-olefins**
Verfahren zur Herstellung eines verbrückten bandförmigen Ton enthaltenden Chromkatalysators und seine Verwendung für die Polymerisation von Alpha-Olefinen
Procédé de préparation d'un catalyseur de chrome et d'argile pontée en forme de bande et son utilisation pour la polymérisation d'alpha-oléfines

(30) Priority: 09.12.1991 US 803857
(43) Date of publication of application: 16.06.1993
(73) Proprietor: PHILLIPS PETROLEUM COMPANY, Bartlesville Oklahoma 74004 (US)
(72) Inventor: Shveima, Joseph Samuel, Bartlesville, OK 74006 (US)
(74) Representative: Dost, Wolfgang, Dr.rer.nat., Dipl.-Chem.

(56) References cited:
- EP-A- 0 066 204
- EP-A- 0 424 187
- US-A- 4 216 188
- US-A- 4 665 045

## Description

This invention relates to a process for forming clay catalysts that can be used in a catalyst system for the polymerization of α-olefins.

### BACKGROUND OF THE INVENTION

The preparation of pillared inter layer clay compositions by reacting a smectite-type clay with an aqueous solution of suitable polymeric catonic hydroxy metal complexes of metals, such as aluminum, titanium, zirconium and chromium is known, as illustrated in U.S. Patent Nos. 4,665,045, 4,742,033. Further, U.S. Patent No. 4,665,045, Pinnavaia et al. discloses that such pillared interlayed clay compositions that are prepared with chromium can be used in olefin polymerization.

However, there is an ever present need to develop pillared interlayered clays with new processes that result in different catalysts. Equally important is the need to develop a process to produce efficient clay catalysts on a commercial scale. Further, a better understanding of the considerable diversity within this group of clays is needed such that the type of polymers produced can be explored for special or unique properties.

### SUMMARY OF THE INVENTION

It is therefore an object of this invention to provide a novel method for preparing catalyst compositions.

It is still a further object of this invention to provide an improved process for the polymerization of α-olefins.

These and other objects of the present invention will become apparent from the disclosure and claims herein provided.

In accordance with the present invention, there is provided a novel method for preparing a new catalyst composition efficient for use in the polymerization of α-olefins by preparing a pillared ribbon-like silicate clay comprising the following steps of:
(a) preparing a hydrolyzed first solution by dissolving a chromium salt and a base in water, heating said first solution to a temperature in the range of 20°C to 100°C while stirring continuously until the solution reaches a pH in the range of 1.5 to 2.5 and thereby producing a master batch;
(b) diluting said master batch with water to produce a diluted second solution and heating said diluted second solution to a temperature from 20 to 100°C to produce a heated second solution;
(c) adding a solid ribbon-like silicate clay selected from sepiolites and palygorskites to said heated second solution, and continuing heating;
(d) recovering said pillared ribbon-like silicate clay; and
(e) drying said pillared ribbon-like silicate clay to form first product.

In a further embodiment there is provided the activation of said clay comprising the following steps of:
(a) heating said first product at a temperature in the range of 150°C to 550°C and for a time period in the range of 30 minutes to 10 hours in an inert atmosphere;
(b) thereafter reheating said first product at a temperature in the range of 500°C to 900°C and for a time period in the range of 1 hour to 50 hours in an oxidizing atmosphere and recovering said catalyst composition.

In further accordance with the present invention, there is provided an improved method for the polymerization of α-olefins which comprises: contacting at least one mono-1-olefin having 2 to 8 carbon atoms per molecule with said catalyst; optionally copolymerizing a comonomer having from 3 to 8 carbon atoms per molecule; and optionally combining said catalyst with an organo-metal cocatalyst.

### DETAILED DESCRIPTION

### General Preparation of Chromium - Pillared Clays

The clays employed in the present invention are the palygorskites and sepiolites which are norphologically different from clays which have been pillared in the past. Both palygorskites and sepiolites are chain clays which contain three layer units having an octahedral layer sandwiched between two tetrahedral arrays of silicas. However, the octadedral sheets are discontinuous whereas the silica tetrahedral layers, while remaining continuous, contain alternating segments of inverted tetrahedra. The octadedral discontinuity occurs at each inversion point. This unusual arrangement is reflected in their ribbonlike morphologies. Additionally, the natural abundance and commercial availability of clays make them an inexpensive alternative to more costly synthetic silicas presently used for olefin polymerization.

The method employed consists of considerable modifications to the process disclosed in Pinnavaia et al of U.S. patent 4,665,045. One differentiating factor is that Pinnavaia is limited to "...an aqueous slurry of a layer lattice clay selected from the group consisting of smectites, vermiculite, and flurohectorite...". The present invention utilizes palygorskites and sepiolites, clays which are not known in references to be pillarable due to their unique structure. The sepiolites and palygorskites are classified as clays, and contain three layer units with the octadedral layer being sandwiched between two tetrahedral arrays of silicas. However, the octahedral sheets are discontinuous whereas the silica tetrahedral layers, while remaining continuous, contain alternating segments of inverted tetradedra. The octahedral discontinuity occurs at each inversion point. This unusual arrangement is reflected in their ribbonlike morphologies. They are fibrous minerals. Unlike the smectites, the palygorskites and sepiolites contain molecular or zeolitic water within the channels created by the discontinuities in addition to surface-sorbed water.

In combination with utilizing clays not previously known to be pillarable, the present invention provides a novel process for preparing a pillared ribbon-like silicate clay; the first step of which is preparing a hydrolyzed first solution by dissolving a chromium salt and a base in water, heating said first solution to a temperature in the range of 20°C to 100°C while stirring continuously until the solution reaches a pH in the range of 1.5 to 2.5 and thereby producing a master batch. The heating facilitates in a reasonable time the hydrolytic oligomerization of chromium while the pH indicates when to stop heating so as to optimize the concentration of the highly polyhydroxy chromium oligomers. Using the pH of said first solution to determine when heating is sufficient is a novel method of accomplishing what is referred to in prior patents as "aging". Preferably, the heating is conducted at a temperature of about 90°C while stirring continues until said first solution reaches a pH of about 2.3.

Said base is selected from sodium carbonate, ammonium carbonate, sodium hydroxide and ammonium hydroxide with preference given to sodium carbonate. Said salt is selected from chromium nitrate, chromium chloride and chromium acetate with preference given to chromium nitrate.

The second step is diluting said master batch with water to produce a diluted second solution and heating said diluted second solution to a temperature from 20 to 100°C to produce a heated second solution. It was discovered that diluting said master batch accomplishes the goal of producing said pillared ribbon-like silicate clay on a commercial scale.

Pinnavaia discloses the preparation of a clay slurry to be contacted with a chromium solution. In accordance with the present invention, said master batch containing chromium in solution is diluted and dry, i.e. powdered or free flowing, clay is added. When said pillared ribbon-like silicate clay is prepared on a large scale, the liquid volume required to slurry such quantities is too great to be viable. It is unexpected that by diluting said master batch in lieu of slurrying said clay, the liquid volume required is reduced to less than one-fourth of that otherwise required.

The dilution step also provides a means whereby the Cr content of the final catalyst can be controlled. When known methods of preparing pillared silicate clays are used, the final clay product is high in Cr content; and when this product is utilized as a polymerization catalyst, an unaccepteably high amount of Cr(VI) is present. Possible health hazards associated with Cr(VI) are diminished when the initial Cr content is controlled via the method of the present invention.

Said dilution is carried out such that said first solution is diluted to the ratio of 0.5 ml H₂O to 10 ml H₂O to about 1 ml master batch with a preferred dilution ratio of about 4 mls H₂O to about 1 ml master batch. Said second solution is heated to a temperature in the range of 20°C to 100°C with a preferred heating at about 90°C.

The third step comprises adding a solid clay selected from sepiolites and palygorskites to said heated second solution. The clay is added in solid form for the reasons set out supra. The liquid volume of said second solution is in the range of .5 ml to 20 ml per gram of clay and contains an amount of chromium in the range of .001 grams to .01 g per ml of said second solution, with a preferred volume of said second solution being about 9 mls per gram of clay and containing about .002 g of chromium per ml of said second solution.

The novel pillared ribbon-like silicate clay may be recovered by conventional methods well known to those skilled in the art. However, it is preferred that said pillared ribbon-like silicate clay be washed and centrifuged with an initial series of washes being conducted with H₂O and a secondary series of washes being conducted with an alcohol for the purpose of removing excessive amounts of H₂O before the final drying step. This produces a first product which is thereafter dryed using any method known to those of skill in the art such as oven or vacuum drying. Other methods to remove water include but are not limited to azeotrope drying, spray drying or freeze drying.

### General Activation of Chromium-Pillared Clays

The dryed chromium pillared clays can be activated to achieve a catalyst system by performing the following steps which comprise:
(a) heating said first product at a temperature in the range of 150°C to 550°C and for a time period in the range of 30 minutes to 10 hours in an inert atmosphere, with a preferred temperature of about 500°C for a time period of about 1 hour;
(b) thereafter reheating said first product at a temperature in the range of 500°C to 900°C and for a time period in the range of 1 hour to 50 hours in an oxidizing atmosphere and recovering a second product, with a preferred temperature of about 650°C for a time period of about 3 hours.

Optionally, the activation may further comprise cooling said second product to a temperature in the range of 300°C to 500°C and for a time period in the range of 1 minute to 5 hours in a reducing atmosphere, with a preferred temperature of 350°C for a time period of about 30 minutes. The optional heating accomplishes a more productive olefin polymerization catalyst than that which is made via a one-step continuous heating is unable to achieve.

### General Polymerization Process Utilizing the Catalyst System

The polymerization process wherein the catalyst prepared according to the present invention is used requires that at least one olefin having 2 to 8 carbon atoms per molecule be contacted with said catalyst system. The olefin is selected from ethylene, propylene, 1-pentene, 1-hexene, and 1-octene. Preferably said olefin is predominantly ethylene.

A comonomer may be copolymerized with ethylene to form an ethylene copolymer. Said comonomer is selected from propylene, 1-butene, 1-pentene, 1-hexene, and 1-octene. Preferred copolymers are those of ethylene and 0.4 to 1 weight percent of a comonomer selected from C₄ to C₁₂ mono-1-olefins, most preferably hexene.

Additionally, said novel catalyst system may be combined with an organo-metal cocatalyst selected from triethylaluminum, triethylboron, and diethylsilane. Preferred cocatalyst is triethylaluminum.

### EXAMPLES

### Preparation of Ribbon-Like Silicate Pillared Clay

### Example I

A series of chromium-containing sepiolite clay catalysts were prepared from a clay obtained from Vallecas, Spain. The analysis supplied by the vendor indicates the clay was comprised of the following compound calculated in oxide form: 54.89 weight percent SiO₂; 22.03 weight percent MgO; 2.41 weight percent Al₂O₃; 0.62 weight percent FeO; 0.15 weight percent CaO; 1.32 weight percent K₂O+Na₂O; 0.07 weight percent TiO; and 11.19 weight percent H₂O. The cation exchange capacity was 8.3 meq/100 grams. Nitrogen pore size distribution measurements showed a surface area of 137 m²/g and a pore volume of 0.52 cm³/g.

Preparation of Master Batch: 1333 g (3.33 moles) of Cr(NO₃)₃·9H₂O was dissolved in 13.3 liters of deionized water to which was added slowly while stirring a solution made by dissolving 353 g (3.33 moles) of Na₂CO₃ in 6.7 liters of deionized water. While stirring continuously, the mixture was heated at 90-95°C for 15 to 24 hours replenishing any water loss because of evaporation. The mixture was cooled and stored at ambient temperature.

To 1 liter of master batch, 2.0 liters of deionized water were added and then heated to 90-95°C. While it was stirred continually over a 15 minute period, 454 g of Pangel Clay were added. After addition of the clay, the solution was stirred and heated for 3 hours replenishing any water loss because of evaporation. The clay liquid mixture was divided among 4 to 8 1-liter centrifuge bottles. Each batch was centrifuged and washed six times with 600 ml portions of deionized water followed by 4 times with 600 ml portions of methanol. The individual batches were recombined and dried in a vacuum oven at 50-100°C with a nitrogen purge overnight. The dry pillared clay was then ground using a Wiley Mill and sieved through a 0.3mm (50-mesh) screen to achieve Product A.

### Activation

### Example II

Twenty to 25 g of Product A was activated for polymerization in a laboratory sized fluidized bed (48 mm O.D. quartz tube) at elevated temperatures by sequential treatment with a stream of dry nitrogen for one hour at 400°C followed by a stream of dry air for three hours at 650°C. After activation, the catalyst (A1) was cooled under a stream of dry nitrogen to ambient temperature, recovered and stored in dry nitrogen until ready for use.

### Example III

Activated Product A was prepared in a similar manner to that of A1 with the exception that after air oxidation the catalyst was cooled under nitrogen to 350°C, at which temperature a stream of dry CO was passed through the catalyst bed for 30 to 45 minutes. The CO was then purged with dry nitrogen while cooling to ambient temperature. The catalyst was recovered and stored as above to render Catalyst A2. Analysis: Weight percent Chromium (1.9), Magnesium (17.0)

### Polymerization

### Example IV

The polymerization of ethylene alone or in admixture with hexene-1 comonomer was carried out in a particle form process employing a 2.6 liter stainless-steel jacketed reactor. After flushing the clean reactor with dry nitrogen and dry isobutane vapor, one liter of dry, liquid isobutane was added as diluent. The sealed reactor was heated to the specified temperature after which a weighted amount of catalyst (0.03 to 1 g) was charged and a solution of cocatalyst, if used, amounting to 1.0-2.0 ml of a 0.5 weight percent organometal compound such as triethylaluminum, triethylboron, and diethylsilane, and mixtures thereof. The reactor was then pressurized to 3.9 MPa (550 psig) with ethylene and maintained at that pressure throughout the reaction with ethylene flow being regulated by the rate of polymerization. Polymerization time was normally one hour. The productivity was calculated by dividing the weight of the dried reactor product by the weight of catalyst for a one-hour run and was expressed in terms of g polymer per g catalyst per hour. Polymerization times deviating from 60 minutes were normalized to 60 minutes on the basis of the observed constant polymerization rate exhibited by these clay-based olefin catalysts under a variety of polymerization conditions. Thus, the uncorrected productivity value was corrected to 60 minutes by multiplying it with 60 and dividing that result by the actual polymerization time in minutes.

The catalyst, polymerization conditions, results and selected properties of the polyethylenes obtained are presented in Table I.

**Table I**

| Polymerization Results and Polyethylene Properties | | | | | | |
|---|---|---|---|---|---|---|
| Catalyst No. | Temp. °C | Hexene-1 (wt%) | Adjuvant (ppm) | Productivity g/g/hr | HLMI | Density g/ml |
| A1 | 88 | | TEA(5) | 2020 | | |
| A1 | 88 | | TEA(5) | 1560 | | |
| A1 | 95 | | | 3170 | | |
| A1 | 105 | | | 2580 | 0.3 | |
| A1 | 105 | 1.1 | | 2070 | 0.7 | 0.944 |
| A1 | 105 | | TEA(5) | 2480* | 2.8 | 0.951 |
| A1 | 105 | | | 2050 | 1.4 | |
| A1 | 105 | 1.1 | | 1100 | 0.7 | 0.946 |
| A1 | 105 | | TEA(5) | 3560* | 2.9 | 0.953 |
| A2 | 105 | | | 1920 | 0.1 | |
| A2 | 105 | | TEA(3) | 2300* | 6.1 | 0.948 |
| A2 | 95 | | | 1600 | | |
| A2 | 95 | 1.1 | TEA(5) | 1500* | 8.0 | |

| | | | | | | |
|---|---|---|---|---|---|---|
| * Reactor contains 5 mole percent hydrogen. | | | | | | |

### Example V

### Preparation of Pillared Palygorskite Clay

The palygorskite employed, an example of a dioctahedral clay, was a product of Georgia, U.S. Analysis showed that it has a surface area of 126 m²/g, a pore volume of 0.64 cm³/g and a CEC (cation exchange capacity) of 16.7 meq. per 100 g. It comprises the following components calculated in oxide form: 62.0 weight percent SiO₂; 10.3 weight percent Al₂O₃; 9.8 weight percent MgO; 1.9 weight percent CaO; 3.5 weight percent FeO; 1.1 weight percent K₂O+Na₂O; and 10.0 weight percent H₂O.

160 ml of master batch solution was heated to 90-95°C. While it was continually stirred, 6.5 g of palygorskite Clay (Georgia) were added and heated for 1 hour. After cooling to ambient temperature the mixture was transferred to a 1-liter centrifuge bottle. The mixture was centrifuged and washed six times with 600 ml portions of deionized water followed by four times with 600 ml portions of methanol. The pillared clay was dried in a vacuum oven set at 100-110°C with a nitrogen purge for 24 hours. A sample was ground in a laboratory mill and passed through a No. 50 sieve to render Product A'.

### Example VI

To 18 ml of master batch, 52 ml of deionized water were added. This solution was heated to 90-95°C. While continually stirring 7.0 g of palygorskite Clay were added. After addition of clay, the mixture was heated while stirring for 1 hour. The chromium pillared palygorskite clay was isolated, washed, dried and ground as described in Example V to render Product B'.

### Example VII

Products A' and B' were activated as described in Example II to render Products A'1 and B'1.

### Example VIII

The polymerization of ethylene using Catalyst A'1 or B'1 was carried out in a particle form process employing a 2.6 liter stainless-steel jacketed reactor. After flushing the clean reactor with dry nitrogen and dry isobutane vapor, one liter of dry, liquid isobutane was added as diluent. The sealed reactor was heated to the specified temperature after which a weighted amount of catalyst (0.03 to 1 g) was charged and a solution of cocatalyst, if used, amounting to 1.0-2.0 ml of a 0.5 weight percent organometal compound such as triethylaluminum, triethylboron, and diethylsilane, and mixtures thereof. The reactor was then pressurized to 3.9 MPa (550 psig) with ethylene and maintained at that pressure throughout the reaction with ethylene flow being regulated by the rate of polymerization. Polymerization time was normally one hour. The productivity was calculated by dividing the weight of the dried reactor product by the weight of catalyst for a one-hour run and was expressed in terms of g polymer per g catalyst per hour. Polymerization times deviating from 60 minutes were normalized to 60 minutes on the basis of the observed constant polymerization rate exhibited by these clay-based olefin catalysts under a variety of polymerization conditions. Thus, the uncorrected productivity value was corrected to 60 minutes by multiplying it with 60 and dividing that result by the actual polymerization time in minutes. The catalyst, polymerization conditions, results and selected properties of the polyethylenes obtained are presented in Table II.

**Table II**

| Polymerization Results and Polyethylene Properties | | | |
|---|---|---|---|
| Catalyst No. | Temp. °C | Adjuvant (ppm) | Productivity g/g/hr |
| A'1 | 95 | TEA(5) | 3600 |
| B'1 | 95 | TEA(5) | 2450 |

## Claims

1. A process for preparing a pillared ribbon-like silicate clay which comprises:
(a) preparing a hydrolyzed first solution by dissolving a chromium salt ad a base in water, heating said first solution to a temperature from 20 to 100°C while stirring continuously until the solution reaches a pH from 1.5 to 2.5 and thereby producing a master batch;
(b) diluting said master batch with water to produce a diluted second solution and heating said diluted second solution to a temperature from 20 to 100°C to produce a heated second solution;
(c) adding a solid clay selected from sepiolites and palygorskites to said heated second solution, and continuing heating;
(d) recovering said pillared ribbon-like silicate clay; and
(e) drying said pillared ribbon-like silicate clay to form first product.

2. The process of claim 1 wherein said base is selected from sodium carbonate, ammonium carbonate, sodium hydroxide and ammonium hydroxide, in particular wherein said base is sodium carbonate.

3. The process of any of the preceding claims wherein said salt is selected from chromium nitrate, chromium chloride and chromium acetate, in particular wherein said salt is chromium nitrate.

4. The process of any of the preceding claims wherein said heating of said first solution in step (a) is conducted at a temperature of about 90°C while stirring continues until said first solution reaches a pH of about 2.3.

5. The process of any of the preceding claims wherein said first solution is diluted in step (b) to the ratio from 0.5 to 10 ml H₂O to about 1 ml master batch, in particular wherein said first solution is diluted to a ratio of about 4 ml H₂O to about 1 ml master batch.

6. The process of any of the preceding claims wherein said heating of said second solution in step (b) is conducted at a temperature of about 90°C for a time period of about 2 hours.

7. The process of any of the preceding claims wherein the liquid volume of said second solution is from 0.5 to 20 ml per gram of clay and contains an amount of chromium from 0.001 to 0.01 gram per ml of said second solution, in particular wherein the liquid volume of said second solution is about 9 ml per gram of clay and contains about 0.002 g of chromium per ml of said second solution.

8. The process of any of the preceding claims for preparing said pillared ribbon-like silicate clay which comprises:
(a) preparing a hydrolyzed first solution by dissolving chromium nitrate and sodium carbonate in water, heating said first solution to a temperature of about 90°C while stirring continues until said first solution reaches a pH of about 2.3 and thereby producing a master batch;
(b) diluting said master batch with water to achieve a ratio of about 4 ml H₂O to about 1 ml master batch to produce a diluted second solution and heating said diluted second solution at a temperature of about 90°C;
(c) adding solid sepiolite clay to said second solution in a ratio of about 9 ml of second solution per gram of clay wherein said second solution contains 0.002 gram of chromium and continue heating solution for a period of 1 hour;
(d) recovering said pillared ribbon-like silicate clay to produce a first product by washing and centrifuging said second solution and thereafter drying said first product.

9. The process of any of the preceding claims further comprising activating said pillared ribbon-like silicate clay first product to produce a catalyst.

10. The process of claim 9 wherein said activating of said first product comprises:
(a) heating said first product at a temperature from 150 to 550°C and for a time period from 30 minutes to 10 hours in an inert atmosphere;
(b) thereafter reheating said first product at a temperature in the range from 500 to 900°C and for a time period from 1 to 50 hours in an oxidizing atmosphere and recovering a second product.

11. The process of claim 10 wherein said first product is heated at a temperature in an inert atmosphere of about 500 °C for a time period of about 1 hour; and said first product is reheated at a temperature of about 650 °C for a time period of about 3 hours in an oxidizing atmosphere.

12. The process of claim 10 or 11 further comprising treating said second product at a temperature from 300 to 500 °C and for a time period from 1 minute to 5 hours in a reducing atmosphere, in particular wherein said second product is treated at a temperature of about 350 °C for a time period of about 30 minutes in a reducing atmosphere.

13. The process of any of claims 9 to 12 further comprising combining said catalyst with an organo-metal cocatalyst, in particular wherein said organo-metal cocatalyst is selected from triethylaluminum, triethylboron, and diethylsilane, more particularly triethylaluminum.

14. The process of any of claims 9 to 13 further comprising the step of using the said catalyst in a polymerization process comprising contacting at least one olefin having 2 to 8 carbon atoms per molecule with said catalyst, in particular wherein said olefin is selected from ethylene, propylene, 1-pentene, 1-hexene, and 1-octene, more particularly wherein said olefin is ethylene.

15. The process of claim 14 wherein a comonomer having from 3 to 8 carbon atoms per molecule is copolymerized with ethylene to form an ethylene copolymer, in paticular wherein said comonomer is selected from propylene, 1-butene, 1-pentene, 1-hexene, and 1-octene, more particularly 1-hexene.

## Patentansprüche

1. Verfahren zur Herstellung eines verbrückten bandförmigen Silicat-Tons, umfassend folgende Stufen:
(a) Herstellen einer hydrolysierten ersten Lösung durch Lösen eines Chromsalzes und einer Base in Wasser, Erwärmen der ersten Lösung auf eine Temperatur im Bereich von 20-100°C unter ständigem Rühren, bis die Lösung einen pH-Wert im Bereich von 1,5-2,5 erreicht, wodurch eine Vormischung (Masterbatch) gebildet wird;
(b) Verdünnen der Vormischung mit Wasser unter Bildung einer verdünnten zweiten Lösung und Erwärmen dieser verdünnten zweiten Lösung auf eine Temperatur von 20-100°C unter Bildung einer erwärmten zweiten Lösung;
(c) Zugeben eines festen Tons, der unter Sepiolithen und Palygorskiten ausgewählt ist, zu der erwärmten zweiten Lösung und Fortsetzen des Erwärmens;
(d) Gewinnen des verbrückten bandförmigen Silicat-Tons; und
(e) Trocknen des verbrückten bandförmigen Silicat-Tons unter Bildung eines ersten Produkts.

2. Verfahren nach Anspruch 1, wobei die Base unter Natriumcarbonat, Ammoniumcarbonat, Natriumhydroxid und Ammoniumhydroxid ausgewählt wird und wobei es sich bei der Base insbesondere um Natriumcarbonat handelt.

3. Verfahren nach einem der vorstehenden Ansprüche, wobei das Salz unter Chromnitrat, Chromchlorid und Chromacetat ausgewählt wird und wobei es sich beim Salz insbesondere um Chromnitrat handelt.

4. Verfahren nach einem der vorstehenden Ansprüche, wobei die Erwärmung der ersten Lösung in der Stufe (a) bei einer Temperatur von etwa 90°C unter Rühren fortgesetzt wird, bis die erste Lösung einen pH-Wert von etwa 2,3 erreicht.

5. Verfahren nach einem der vorstehenden Ansprüche, wobei die erste Lösung in der Stufe (b) auf ein Verhältnis von 0,5-10 ml H₂O auf etwa 1 ml Vormischung verdünnt wird, wobei insbesondere die erste Lösung auf ein Verhältnis von etwa 4 ml H₂O auf etwa 1 ml Vormischung verdünnt wird.

6. Verfahren nach einem der vorstehenden Ansprüche, wobei das Erwärmen der zweiten Lösung in der Stufe (b) für etwa 2 Stunden bei einer Temperatur von etwa 90°C durchgeführt wird.

7. Verfahren nach einem der vorstehenden Ansprüche, wobei das Flüssigkeitsvolumen der zweiten Lösung 0,5-20 ml pro Gramm Ton beträgt und die Chrommenge 0,001-0,01 g pro ml der zweiten Lösung beträgt, wobei insbesondere das Flüssigkeitsvolumen der zweiten Lösung etwa 9 ml pro Gramm Ton beträgt und die Chrommenge 0,002 g pro ml der zweiten Lösung beträgt

8. Verfahren nach einem der vorstehenden Ansprüche zur Herstellung des verbrückten bandförmigen Silicat-Tons, umfassend folgende Stufen:
(a) Herstellen einer hydrolysierten ersten Lösung durch Lösen von Chromnitrat und Natriumcarbonat in Wasser, Erwärmen der ersten Lösung auf eine Temperatur von etwa 90°C unter ständigem Rühren, bis die erste Lösung einen pH-Wert von etwa 2,3 erreicht, wodurch eine Vormischung (Masterbatch) gebildet wird;
(b) Verdünnen der Vormischung mit Wasser unter Erzielung eines Verhältnisses von etwa 4 ml H₂O auf etwa 1 ml Vormischung unter Bildung einer verdünnten zweiten Lösung und Erwärmen dieser verdünnten zweiten Lösung auf eine Temperatur von etwa 90°C;
(c) Zugeben von festem Sepiolith-Ton zu der zweiten Lösung in einem Verhältnis von etwa 9 ml der zweiten Lösung pro Gramm Ton, wobei die zweite Chromlösung 0,002 g Chrom enthält, und weiteres Erwärmen der Lösung für 1 Stunde;
(d) Gewinnen des verbrückten bandförmigen Silicat-Tons unter Bildung eines ersten Produkts durch Waschen und Zentrifugieren der zweiten Lösung und anschließend Trocknen des ersten Produkts.

9. Verfahren nach einem der vorstehenden Ansprüche, ferner umfassend die Aktivierung des als erstes Produkt erhaltenen verbrückten bandförmigen Silicat-Tons unter Bildung eines Katalysators.

10. Verfahren nach Anspruch 9, wobei die Aktivierung des ersten Produkts folgende Stufen umfaßt:
(a) Erwärmen des ersten Produkts auf eine Temperatur im Bereich von 150-550°C für eine Zeitspanne im Bereich von 30 Minuten bis 10 Stunden in einer inerten Atmosphäre;
(b) anschließendes Erwärmen des ersten Produkts auf eine Temperatur im Bereich von 500-900°C für eine Zeitspanne im Bereich von 1 Stunde bis 50 Stunden in einer oxidierenden Atmosphäre und Gewinnen eines zweiten Produkts.

11. Verfahren nach Anspruch 10, wobei das erste Produkt in einer inerten Atmosphäre auf eine Temperatur von etwa 500°C für eine Zeitspanne von etwa 1 Stunde erwärmt wird; und wobei das erste Produkt erneut auf eine Temperatur von etwa 650°C für eine Zeitspanne von etwa 3 Stunden in einer oxidierenden Atmosphäre erwärmt wird.

12. Verfahren nach Anspruch 10 oder 11, ferner umfassend die Behandlung des zweiten Produkts bei einer Temperatur von 300-500°C und für eine Zeitspanne von 1 Minute bis 5 Stunden in einer reduzierenden Atmosphäre, wobei insbesondere das zweite Produkt für eine Zeitspanne von etwa 30 Minuten in einer reduzierenden Atmosphäre bei einer Temperatur von etwa 350°C behandelt wird.

13. Verfahren nach einem der Ansprüche 9-12, ferner umfassend die Vereinigung des Katalysators mit einem Organometall-Cokatalysator, wobei der Organometall-Cokatalysator insbesondere unter Triethylaluminium, Triethylbor und Diethylsilan ausgewählt wird, wobei es sich insbesondere um Triethylaluminium handelt.

14. Verfahren nach einem der Ansprüche 9-13, ferner umfassend die Stufe der Verwendung des Katalysators in einem Polymerisationsverfahren, das das Kontaktieren mindestens eines Olefins mit 2-8 Kohlenstoffatomen pro Molekül mit dem Katalystor umfaßt, wobei das Olefin insbesondere unter Ethylen, Propylen, 1-Penten, 1-Hexen, und 1-Octen ausgewählt ist, wobei es sich beim Olefin vorzugsweise um Ethylen handelt.

15. Verfahren nach Anspruch 14, wobei ein Comonomeres mit 3-8 Kohlenstoffatomen pro Molekül mit Ethylen unter Bildung eines Ethylen-Copolymeren copolymerisiert wird, wobei das Comonomere insbesondere unter Propylen, 1-Buten, 1-Penten, 1-Hexen und 1-Octen ausgewählt ist und es sich vorzugsweis um 1-Hexen handelt.

## Revendications

1. Un procédé pour préparer une argile silicate analogue à un ruban en colonne qui comprend :
(a) la préparation d'une première solution hydrolysée en dissolvant un sel de chrome et une base dans l'eau, le chauffage de ladite première solution à une température de 20 à 100°C tout en agitant en continu jusqu'à ce que la solution atteigne un pH de 1,5 à 2,5 et la production subséquente d'un mélange-maître ;
(b) la dilution dudit mélange-maître avec de l'eau pour produire une deuxième solution diluée et le chauffage de ladite deuxième solution diluée à une température de 20°C à 100°C pour produire une deuxième solution chauffée ;
(c) l'addition d'une argile solide choisie parmi les sépiolites et les palygorskites à ladite deuxième solution chauffée et la poursuite du chauffage ;
(d) la récupération de ladite argile silicate analogue à un ruban en colonne ; et
(e) le séchage de ladite argile silicate analogue à un ruban en colonne pour former un premier produit.

2. Le procédé selon la revendication 1, dans lequel ladite base est choisie parmi le carbonate de sodium, le carbonate d'ammonium, l'hydroxyde de sodium et l'hydroxyde d'ammonium, en particulier dans lequel ladite base est le carbonate de sodium.

3. Le procédé selon l'une quelconque des revendications précédentes, dans lequel ledit sel est choisi parmi le nitrate de chrome, le chlorure de chrome et l'acétate de chrome, en particulier dans lequel ledit sel est le nitrate de chrome.

4. Le procédé selon l'une quelconque des revendications précédentes, dans lequel ledit chauffage de ladite première solution dans l'étape (a) est mis en oeuvre à une température d'environ 90°C tout en poursuivant l'agitation jusqu'à ce que ladite première solution atteigne un pH d'environ 2,3.

5. Le procédé selon l'une quelconque des revendications précédentes, dans lequel ladite première solution est diluée dans l'étape (b) au rapport de 0,5 à 10 ml H₂O à environ 1 ml de mélange-maître, en particulier dans lequel ladite première solution est diluée selon un rapport d'environ 4 ml H₂O à environ 1 ml de mélange-maître.

6. Le procédé selon l'une quelconque des revendications précédentes, dans lequel ledit chauffage de ladite deuxième solution dans l'étape (b) est mis en oeuvre à une température d'environ 90°C pendant une période de temps d'environ 2 heures.

7. Le procédé selon l'une quelconque des revendications précédentes, dans lequel le volume de liquide de ladite deuxième solution est de 0,5 à 20 ml par gramme d'argile et contient une quantité de chrome de 0,001 à 0,01 g/l de ladite deuxième solution, en particulier dans lequel le volume de liquide de ladite deuxième solution est d'environ 9 ml par gramme d'argile et contient environ 0,002 g de chrome par ml de ladite deuxième solution.

8. Le procédé selon l'une quelconque des revendications précédentes pour préparer ladite argile silicate analogue à un ruban en colonne qui comprend :
(a) la préparation d'une première solution hydrolysée en dissolvant du nitrate de chrome et du carbonate de sodium dans l'eau, le chauffage de ladite première solution à une température d'environ 90°C tout en agitant en continu jusqu'à ce que ladite première solution atteigne un pH d'environ 2,3 et la production subséquente d'un mélange-maître ;
(b) la dilution dudit mélange-maître avec de l'eau pour obtenir un rapport d'environ 4 ml H₂O à environ 1 ml de mélange-maître pour produire une deuxième solution diluée et le chauffage de ladite deuxième solution diluée à une température d'environ 90°C ;
(c) l'addition d'argile sépiolite solide à ladite deuxième solution selon un rapport d'environ 9 ml de la deuxième solution par gramme d'argile où ladite deuxième solution renferme 0,002 g de chrome et la poursuite du chauffage de la solution pendant une période d'une heure ;
(d) la récupération de ladite argile silicate analogue à un ruban en colonne pour produire un premier produit par lavage et centrifugation de ladite deuxième solution et séchage subséquent dudit premier produit.

9. Le procédé selon l'une quelconque des revendications précédentes comprenant, en outre, l'activation dudit premier produit d'argile silicate analogue à un ruban en colonne pour produire un catalyseur.

10. Le procédé selon la revendication 9 dans lequel ladite activation dudit premier produit comprend :
(a) le chauffage dudit premier produit à une température de 150 à 550°C et pendant une période de temps de 30 minutes à 10 heures dans une atmosphère inerte ;
(b) le rechauffage subséquent dudit premier produit à une température comprise dans la gamme de 500 à 900°C et pendant une période de temps de 1 à 50 heures dans une atmosphère oxydante et la récupération d'un deuxième produit.

11. Le procédé selon la revendication 10 dans lequel ledit premier produit est chauffé à une température dans une atmosphère inerte d'environ 500°C pendant une période de temps d'environ 1 heure et ledit premier produit est rechauffé à une température d'environ 650°C pendant une période de temps d'environ 3 heures dans une atmosphère oxydante.

12. Le procédé selon la revendication 10 ou 11, comprenant, en outre, le traitement dudit deuxième produit à une température de 300 à 500°C et pendant une période de temps de 1 minute à 5 heures dans une atmosphère réductrice, en particulier dans lequel ledit deuxième produit est traité à une température d'environ 350°C pendant une période de temps d'environ 30 minutes dans une atmosphère réductrice.

13. Le procédé selon l'une quelconque des revendications 9 à 12 comprenant, en outre, la combinaison dudit catalyseur avec un cocatalyseur organo-métallique, en particulier dans lequel ledit cocatalyseur organo-métallique est choisi parmi le triéthylaluminium, le triéthylbore et le diéthylsilane plus particulièrement le triéthylaluminium.

14. Le procédé selon l'une quelconque des revendications 9 à 13 comprenant, en outre, l'étape d'utilisation dudit catalyseur dans un procédé de polymérisation comprenant la mise en contact d'au moins une oléfine ayant de 2 à 8 atomes de carbone par molécule avec ledit catalyseur, en particulier dans lequel ladite oléfine est choisie parmi l'éthylène, le propylène, le 1-pentène, le 1-hexène et le 1-octène, plus particulièrement dans lequel ladite oléfine est l'éthylène.

15. Le procédé selon la revendication 14, dans lequel un comonomère ayant de 3 à 8 atomes de carbone par molécule est copolymérisé avec de l'éthylène pour former un copolymère d'éthylène, en particulier dans lequel ledit comonomère est choisi parmi le propylène, le 1-butène, le 1-pentène, le 1-hexène et le 1-octène, plus particulièrement le 1-hexène.
